# EUROPEAN PATENT APPLICATION

(11) **EP 1 744 249 A1**
(43) Date of publication of application: **17.01.2007**
(21) Application number: 06115753.3
(22) Date of filing: 20.06.2006
(51) Int. Cl.: G06F 12/02

(54) **Method and apparatus for managing DRM rights object in low-performance storage device**

(30) Priority: 24.06.2005 US 693402 P; 07.06.2006 KR 20060051008
(71) Applicant: Samsung Electronics Co., Ltd., Suwon-si 442-742 Gyeonggi-Do (KR)
(72) Inventor: Oh, Yun-sang, Seoul (KR); Jung, Kyung-im, Seongnam-si Gyeonggi-do (KR); Kim, Shin-han, Seoul (KR)
(74) Representative: Robinson, Ian Michael

(57) **Abstract**

A method of efficiently managing a Digital Rights Management (DRM) rights object in a low-performance storage device (250), which includes causing a host apparatus (160) to divide a DRM rights object (240) into two or more blocks each having a size proportional to an access unit of a low-performance storage device (250), and transmitting the divided two or more blocks to the low-performance storage device (250). The access unit is a unit of data reading or data storage in the low-performance storage device (250).

## Description

The present invention relates to a method and apparatus for storing and accessing rights objects, and in particular, to a method and apparatus for efficiently managing DRM (Digital Rights Management) rights objects in a low-performance storage device.

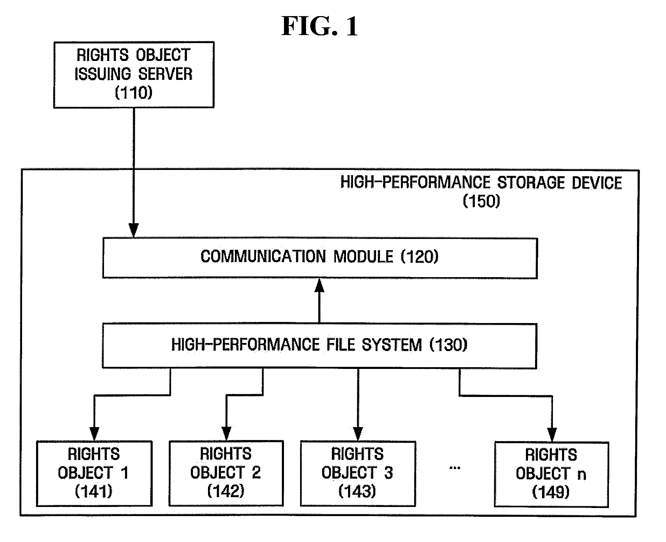

Figure 1 is a diagram showing a case where rights objects are stored between a rights object issuing server and a high-performance storage device according to the related art. A high-performance storage device 150 includes a communication module 120 that enables communications between the high-performance storage device 150 and the rights object issuing server 110, and a high-performance file system 130 that manages DRM rights objects to be stored in a high-performance apparatus.

In general, personal computers (PC) or cellular phones can be used as high-performance storage device 150. These apparatuses have a storage space using a HDD or a NAND flash memory device, thereby storing digital contents or DRM rights objects to be protected by DRM.

A process of issuing a right in the high-performance storage device 150 will now be described. First, if the high-performance storage device 150 requests the rights object issuing server 110 to issue rights objects according to a user request, the rights object issuing server 110 generates DRM rights objects, including contents use rights for transferring the contents to another user, according to a pay for use of contents of the user.

The DRM rights objects issued by the rights object issuing server 110 are transmitted to the high-performance storage device 150 through a network, and the high-performance file system 130 of the high-performance storage device 150 securely stores the individual DRM rights objects 141, 142, ..., and 149 in individual specified regions of a storage space of the high-performance storage device 150.

Therefore, the DRM rights objects are stored by the high-performance file system 130 while maintaining security, and thus a license can be protected.

The DRM rights objects include various formats and contents, and the sizes thereof are not particularly limited. DRM techniques are primarily applied to multimedia apparatuses, such as cellular phones. In recent years, there are introduced products that have a low-performance storage device, such as a portable memory card or the like, so as to increase the storage space. Accordingly, a DRM technique that can be applied to a low-performance storage device is required.

However, since the low-performance storage device has limits in view of a CPU, a memory, and so on due to marketable price, it cannot use a high-performance file system that is used in high-performance apparatuses, such as general-use personal computers or cellular phones. Accordingly, a method and apparatus are needed for storing DRM rights objects on the basis of the limits of the CPU and the memory inherent in the low-performance storage device.

According to the present invention there is provided an apparatus and method as set forth in the appended claims. Preferred features of the invention will be apparent from the dependent claims, and the description which follows.

The present invention has been finalized in order to address the above-described problems, and an aspect of the present invention is to provide a method and apparatus for storing and accessing DRM rights objects in a low-performance storage device.

Another aspect of the present invention is to efficiently store DRM rights objects, without changing a low-performance storage device.

Aspects of the present invention are not limited to those mentioned above, and other aspects of the present invention will be apparently understood by those skilled in the art through the following description.

According to an aspect of the present invention, a method of efficiently managing a DRM rights object in a low-performance storage device includes causing a host apparatus to divide a DRM rights object into two or more blocks each having a size proportional to an access unit of a low-performance storage device, and transmitting the divided two or more blocks to the low-performance storage device. The access unit is a unit of data reading or data storage in the low-performance storage device.

According to another aspect of the present invention, a method of efficiently managing a DRM rights object in a low-performance storage device includes receiving two or more blocks constituting a predetermined DRM rights object from a low-performance storage device, and combining the received two or more blocks to generate the DRM rights object. Each of the blocks has a size proportional to an access unit of data reading or data storage in the low-performance storage device.

According to another aspect of the present invention, an apparatus for efficiently managing a DRM rights object in a low-performance storage device includes a rights object dividing unit dividing the DRM rights object into two or more blocks each having a size proportional to an access unit of a low-performance storage device, and a communication unit transmitting the divided two or more blocks to the low-performance storage device. The access unit is a unit of data reading or data storage in the low-performance storage device.

According to another aspect of the present invention, an apparatus for efficiently managing a DRM rights object in a low-performance storage device includes a communication unit receiving two or more blocks constituting a predetermined DRM rights object from a low-performance storage device, and a block combining unit which combines the received two or more blocks to generate the DRM rights object. Each of the blocks has a size proportional to an access unit of data reading or data storage in the low-performance storage device. Indeed, each block size is such that it may be accessed by the low-performance storage device.

The above aspects and other features and advantages of the present invention will become more apparent by describing in detail exemplary embodiments thereof with reference to the attached drawings in which:
Figure 1 is a diagram showing a case where rights objects are stored between a rights object issuing server and a high-performance storage device according to the related art;
Figure 2 is a diagram showing the configuration of a low-performance storage device, which stores a DRM rights object, according to an exemplary embodiment of the present invention;
Figure 3 is diagram showing a case where the DRM rights object is stored in the low-performance storage device according to the exemplary embodiment of the present invention;
Figure 4 is a diagram showing an example of a DRM rights object that is stored in an object storage slot according to the exemplary embodiment of the present invention;
Figure 5 is a diagram showing a case where the DRM rights object shown in Figure 4 is divided into blocks corresponding to a page size of a NAND flash memory device;
Figure 6 is a flow chart showing a process of dividing and storing a DRM rights object according to an exemplary embodiment of the present invention;
Figure 7 is a flow chart showing a process of causing a host apparatus according to an exemplary embodiment of the present invention to read divided blocks of a DRM rights object stored in the low-performance storage device; and
Figure 8 is a diagram showing the configuration of a host apparatus that stores a DRM rights object in the low-performance storage device according to the exemplary embodiment of the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention will be described hereinafter with reference to block diagrams or flowchart illustrations of a method and an apparatus for efficiently managing a DRM rights object in a low-performance storage device according to an exemplary embodiment thereof. It will be understood that each block of the flowchart illustrations and combinations of blocks in the flowchart illustrations can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory (medium) that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the block diagrams may represent a module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently or the blocks may sometimes be executed in reverse order depending upon the functionality involved.

The terms used throughout the specification are defined as follows.

### - DRM (Digital Rights Management)

DRM means a technique in which any one is allowed to freely access the encrypted digital contents, but a license referred to as a rights object is needed to decrypt and execute the encrypted digital contents as a contents object.

### - Contents Object

The contents object means the digital contents, the license of which is protected by using the DRM technique.

### - Rights Object

The rights object means a multimedia digital contents license having decryption keys for decrypting the digital contents, use permission information for defining use forms of the digital contents, and restriction information for restricting the use of digital contents, or having information including a kind of license allocated upon use of the digital contents.

### - Authentication

This term means a procedure of checking security of a specified apparatus before a certain apparatus is in communication with the specified apparatus.

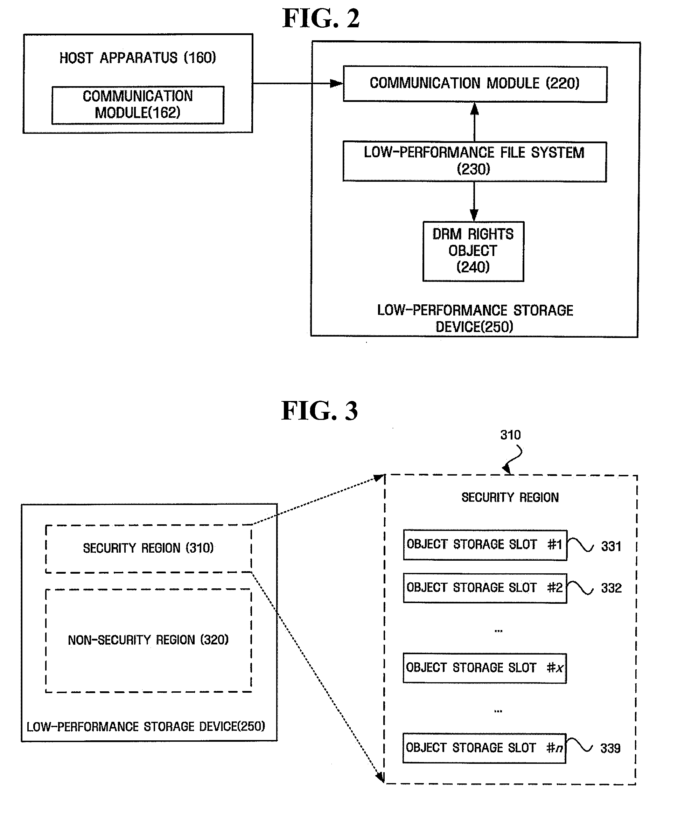

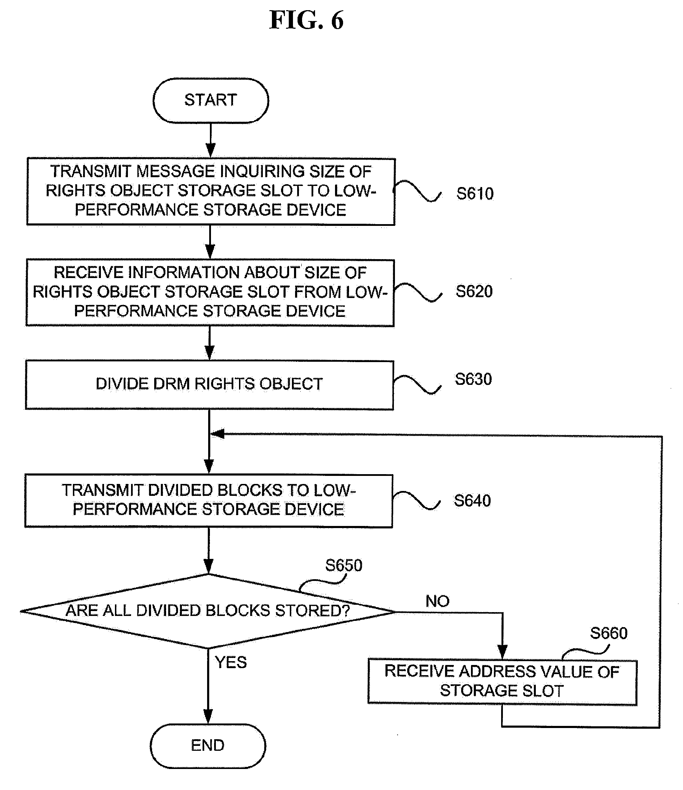

Figure 2 is a diagram showing the configuration of a low-performance storage device, which stores a DRM rights object, according to an exemplary embodiment of the present invention.

The term "unit", as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units. In addition, the components and units may be implemented such that they are executed on one or more computers in a communication system.

In Figure 2, a low-performance storage device 250, which stores a DRM rights object and supplies the DRM rights object to a host apparatus 160, has a communication module 220, a low-performance file system 230, and a DRM rights object 240. The host apparatus 160 and the low-performance storage device 250 transmit the DRM rights object to each other through the communication module 220. The low-performance storage device 250 has the low-performance file system 230 that stores the DRM rights object and has a minimum function capable of performing reading and writing, thereby managing the DRM rights object 240.

When the host apparatus 160, for example, a host apparatus, such as an MP3 player or a cellular phone, stores the rights objects in the low-performance storage device (a memory card, such as MMC or SD, or a USB storage device), which is coupled or attached to the host apparatus for data storage and data access, or reads, updates, or deletes the stored rights object, a separate storage device application is provided in consideration of a processing power of the low-performance storage device 250, regardless of the form, size, and content of the DRM rights object, thereby storing the DRM rights object.

As for a memory device of the low-performance storage device, a storage medium technique, such as a NAND flash memory device or the like, may be used. When a process of reading and writing data from and into the NAND flash memory device, read and write operations are performed on the basis of a page having a specified size (for example, 2 kbytes). If the read and write operations are performed on the basis of the page size, the DRM rights object can be rapidly read and written from and into the NAND flash memory device. Accordingly, in consideration of characteristics for the storage medium, such as the NAND flash memory device, in the low-performance storage device 250 of Figure 2, the DRM rights object can be stored and accessed in proportion to a work unit of a predetermined size.

The low-performance file system 230 receives the DRM rights object to be stored from the host apparatus 160 through the communication module 220, divides the DRM rights object into blocks each having a predetermined size, and stores the divided blocks. At this time, the DRM rights object can be divided and stored according to a data storage and reading method in the low-performance storage device 250. For example, when the low-performance storage device 250 is the NAND flash memory device, the DRM rights object can be divided into blocks according to or proportional to a data access size of the NAND flash memory device, and the divided blocks can be stored.

Since the DRM rights object has been already encrypted before being stored in the low-performance storage device 250, even though the divided blocks are stored in the low-performance storage device 250, a decryption process is required such that the blocks can be recombined and used by another application in future. Accordingly, only a part of the DRM rights object cannot be changed. Further, even though access to the part is made, since it is a part of encrypted data, it is not used to play the contents or the like. As a result, only an authorized user can decrypt and use the stored DRM rights object.

Figure 3 is a diagram showing a case where the DRM rights object is stored in the low-performance storage device 250 according to the exemplary embodiment of the present invention. A memory space of the low-performance storage device 250 is divided into a security region 310 and a non-security region 320. At this time, a security region 310 has multiple DRM rights object storage slots, and stores data requiring security, such as the DRM rights object. In the security region 310, the DRM rights object is divided into blocks and the divided blocks are respectively stored in divided regions each having a predetermined size, for example, object storage slots 331, 332, ..., 339. The object storage slots 331, 332, ..., and 339 are storage spaces that are divided to have a predetermined size. When the low-performance storage device 250 stores data using the NAND flash memory device, each of the object storage slots 331, 332, ..., 339 can become an access unit of the NAND flash memory device. The size of each of the slots can be determined in consideration of the page size of the NAND flash memory device (for example, 2 kbytes).

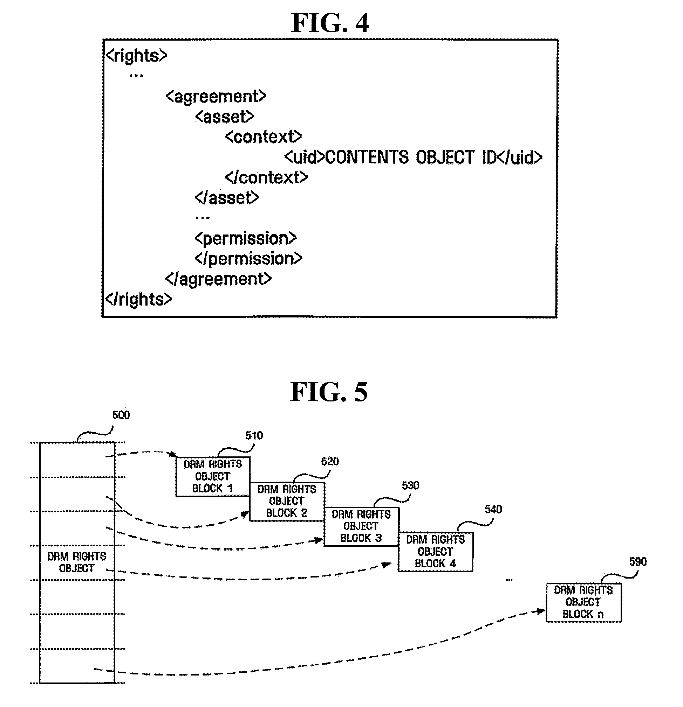

Figure 4 is an example of the DRM rights object that is stored in the object storage slots according to the exemplary embodiment of the present invention. The content of the rights object of Figure 4 is decrypted. After the content of the rights object is encrypted, the rights object is divided into blocks each having a predetermined size and the blocks are respectively stored in the object storage slots. Accordingly, even though a part is extracted, the entire content of the rights object cannot be known. Further, if information for decryption is not provided, it is impossible to read the data. Therefore, the encrypted rights object is protected twice.

Figure 5 is a diagram showing a case where the DRM rights object of Figure 4 is divided into blocks, each corresponding to the page size of the NAND flash memory device. The original DRM rights object 500 is divided into blocks each having a predetermined size, for example, blocks 510, 520, ..., and 590 of Figure 5. Each of the blocks includes a part of the DRM rights object. If the page size is T bytes, and the size of the rights object is N bytes, the rights object can be divided into N/T blocks.

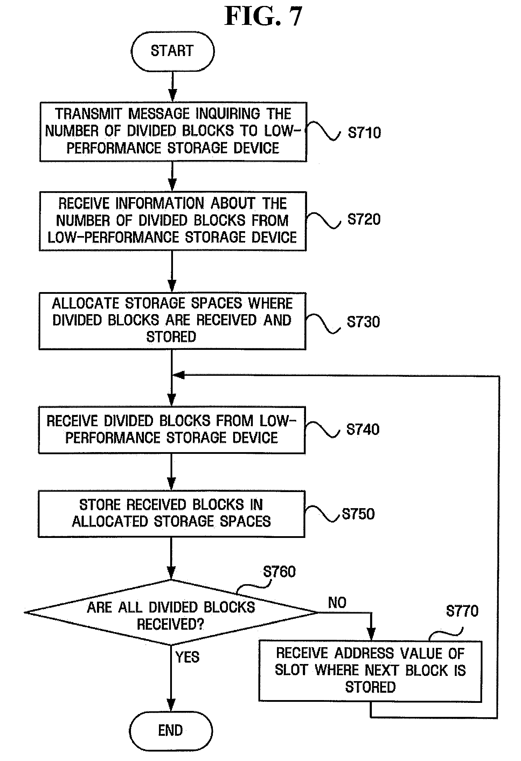

Figure 6 is a flow chart showing a process of dividing and storing the DRM rights object according to the exemplary embodiment of the present invention.

Figure 6 shows a flow of work to be performed by the host apparatus when the host apparatus stores DRM rights object in the low-performance storage device. As described above, in order to divide the DRM rights object into blocks each having a predetermined size, a process of finding out the size of each of the slots of the low-performance storage device is required. Accordingly, the host apparatus transmits a message inquiring the size of each of the rights object storage slots to the low-performance storage device (Step S610). The low-performance storage device transmits the size of each of the storage slots, that is, an access unit, to the host apparatus. The host apparatus receives information about the size of each of the rights object storage slots from the low-performance storage device (Step S620). Then, the host apparatus divides the DRM rights object according to the size (Step S630). The host apparatus transmits divided data, that is, the divided blocks to the low-performance storage device (Step S640). Upon transmission, the blocks may be sequentially transmitted or may be transmitted, together with serial numbers indicating the sequence of the blocks. If the host apparatus knows an address value of an empty DRM rights object storage slot of the low-performance storage device, the address value can also be transmitted. The low-performance storage device that receives the block finds an empty space among the DRM rights object storage slots in the security region and stores the block.

After transmitting the blocks, the host apparatus checks whether or not all the divided blocks are stored in the low-performance storage device (Step S650). If all the blocks are not stored, the next block can be transmitted to the low-performance storage device. At this time, an address value of the storage slot can be received (Step S660). This can be performed when the low-performance storage device transmits an address value of an empty slot for storing the next block to the host apparatus.

Until all the divided blocks are transmitted, Steps S640 to S660 can be repeated.

Figure 7 is a diagram showing a process of causing the host apparatus according to an exemplary embodiment of the present invention to read the divided blocks of the DRM rights object stored in the low-performance storage device.

The host apparatus transmits a message inquiring of the number of the divided blocks to the low-performance storage device (Step S710). The low-performance storage device transmits the number of the divided blocks to the host apparatus, and the host apparatus receives information about the number of the divided blocks (Step S720). Then, the host apparatus allocates the storage spaces for receiving and storing the divided blocks in a region of the host apparatus, such as a memory or disc, on the basis of the information about the size of each of the divided blocks and the number of the divided blocks (Step S730). The size of each of the blocks can be calculated according to the size of the rights object storage slots. The host apparatus sequentially receives the divided blocks from the low-performance storage device (Step S740). At this time, the host apparatus can also receive the serial numbers indicating the sequence of the blocks. Alternatively, when the host apparatus knows the address values of the storage slots of the low-performance storage device where the blocks of the DRM rights object are stored, the address values can also be transmitted.

The received blocks are stored in the allocated storage spaces (Step S750). Since the blocks are obtained by dividing the DRM rights object according to the predetermined size or using an internal method, the blocks can be sequentially stored in the previously allocated storage spaces. If the previously stored block exists, the block may be appended to the previously stored block. At Step S760, it is checked whether or not all the divided blocks are received while the number of the received blocks decrements (Step S760). Then, when the blocks to be received are stored in the low-performance storage device, a step of receiving the next block is repeated. At this time, the low-performance storage device can transmit the address value of the storage slot, in which the next block is stored, to the host apparatus. Accordingly, the host apparatus receives the address value of the slot where the next block is stored (Step S770), and the next block is received.

If the blocks are completely received, the DRM rights object can be used. By the way, when the DRM rights object has an attribute that is changed upon use, the process of storing the DRM rights object in Figure 7 can be repeated.

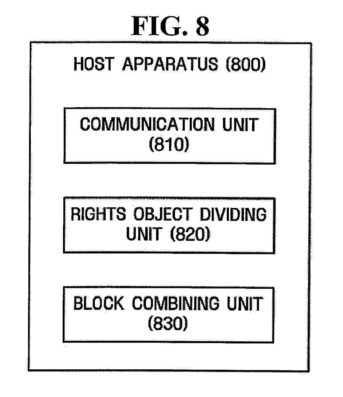

Figure 8 is a diagram showing the configuration of the host apparatus that stores the DRM rights object in the low-performance storage device according to an exemplary embodiment of the present invention.

The host apparatus means an apparatus, such as a PC, a cellular phone, an MP3, or a PMP, that, in connection with the low-performance storage device, uses the rights object stored in the low-performance storage device or stores the rights object in the low-performance storage device.

A communication unit 810 communicates data with the low-performance storage device. A rights object dividing unit 820 divides the DRM rights object into the blocks suitable for the low-performance storage device. A block combining unit 830 combines the blocks received from the low-performance storage device into the DRM rights object.

From a viewpoint of dividing and storing the rights object, the configuration of the host apparatus 800 will now be described.

The rights object dividing unit 820 divides the DRM rights object into two or more blocks each having a size proportional to an access unit of the low-performance storage device. At this time, the access unit may be a unit of data reading or data storage in the low-performance storage device.

The divided blocks are transmitted to the low-performance storage device by the communication unit 810. Before transmission, the communication unit 810 may transmit a message inquiring the size of the access unit to the low-performance storage device and can receive the information about the storage unit from the low-performance storage device. Meanwhile, the communication unit 810 may sequentially transmit the divided blocks. At this time, the blocks may be transmitted one by one, and a position where the next block is to be stored may be received from the low-performance storage device. These steps can be repeated.

From a viewpoint of access to the divided blocks of the rights object, the configuration of the host apparatus 800 will now be described.

The communication unit 810 receives two or more blocks constituting a predetermined DRM rights object from the low-performance storage device. Next, the block combining unit 830 combines the received two or more blocks so as to generate the DRM rights object. At this time, each of the blocks has a size proportional to the access unit of data reading or data storage in the low-performance storage device.

The communication unit 810 can receive information about the number of the divided blocks stored in the low-performance storage device before receiving the blocks. Further, the communication unit 810 may transmit a message requesting to allocate the storage spaces on the basis of the number of the received blocks or may cause a function of allocating the spaces to be activated.

The block combining unit 830 can sequentially combine the received two or more blocks. For example, a method that sequentially receives and appends the divided blocks is used so as to generate one DRM rights object.

According to the exemplary embodiments of the present invention, it is possible to provide an application that can securely store the DRM rights object, while using the low-performance file system designed to have the minimum size in consideration of the characteristics of the low-performance storage device, such as the NAND flash memory device.

According to the exemplary embodiments of the present invention, the low-performance storage device can be provided at low cost.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of efficiently managing a Digital Rights Management (DRM) rights object (240) in a low-performance storage device (250), comprising:
causing a host apparatus (160) to divide a DRM rights object (240) into two or more blocks each having a size proportional to an access unit of a low-performance storage device (250); and
transmitting the divided two or more blocks to the low-performance storage device (250),
wherein the access unit is a unit of data reading or data storage in the low-performance storage device (250).

2. The method of claim 1, further comprising:
transmitting a message inquiring a size of the access unit to the low-performance storage device (250).

3. The method of claim 1 or 2, further comprising:
receiving information about a size of the unit of data storage from the low-performance storage device (250).

4. The method of claim 1, 2 or 3, wherein the transmitting of the divided two or more blocks comprises:
transmitting a first block among the divided blocks to the low-performance storage device (250), and
receiving positional information of a second block to be stored after the first block.

5. A method of efficiently managing a DRM rights object (240) in a low-performance storage device (250), comprising:
receiving two or more blocks constituting a predetermined DRM rights object (240) from a low-performance storage device (250); and
combining the received two or more blocks to generate the DRM rights object (240),
wherein each of the blocks has a size proportional to an access unit of data reading or data storage in the low-performance storage device (250).

6. The method of claim 5, further comprising, before the receiving of the two or more blocks:
receiving information about a number of divided blocks stored in the low-performance storage device (250).

7. The method of claim 5 or 6, further comprising, before the receiving of the two or more blocks:
allocating spaces where divided blocks are to be stored.

8. The method of claim 5, 6 or 7, wherein the combining of the received two or more blocks comprises:
sequentially combining the received two or more blocks.

9. A host apparatus (160), which manages a DRM rights object (240) in a low-performance storage device (250), comprising:
a rights object dividing unit (820) which divides a DRM rights object (240) into two or more blocks each having a size proportional to an access unit of a low-performance storage device (250); and
a communication unit (810) which transmits the divided two or more blocks to the low-performance storage device (250),
wherein the access unit is a unit of data reading or data storage in the low-performance storage device (250).

10. The host apparatus (160) of claim 9, wherein the communication unit (810) transmits a message inquiring a size of the access unit to the low-performance storage device (250).

11. The host apparatus (160) of claim 9 or 10, wherein the communication unit (810) receives information about a size of the unit of data storage from the low-performance storage device (250).

12. The host apparatus (160) of claim 9, 10 or 11, wherein the communication unit (810) transmits a first block among the divided blocks to the low-performance storage device (250), and receives positional information of a second block to be stored after the first block.

13. A host apparatus (160) for managing a DRM rights object (240) in a low-performance storage device (250), comprising:
a communication unit (810) which receives two or more blocks constituting a predetermined DRM rights object (240) from a low-performance storage device (250); and
a block combining unit (830) which combines the received two or more blocks to generate the DRM rights object (240),
wherein each of the blocks has a size proportional to an access unit of data reading or data storage in the low-performance storage device (250).

14. The host apparatus (160) of claim 13, wherein the communication unit (810) receives information about a number of the divided blocks stored in the low-performance storage device (250).

15. The host apparatus (160) of claim 13 or 14, wherein the communication unit (810) allocates spaces where the divided blocks are to be stored.

16. The host apparatus (160) of claim 13, 14 or 15, wherein the block combining unit (830) sequentially combines the received two or more blocks.
